# FASCICULE DE BREVET EUROPEEN

(11) **EP 2 374 859 B1**
(45) Date de publication et mention de la délivrance du brevet: **04.10.2017**
(21) Numéro de dépôt: 11161431.9
(22) Date de dépôt: 07.04.2011
(51) Int. Cl.: C09K 5/20, C09K 5/10, C23F 11/10

(54) **LIQUIDE CALOPORTEUR**
WÄRMETRÄGERFLÜSSIGKEIT
HEAT TRANSFER FLUID

(30) Priorité: 08.04.2010 FR 1052670
(43) Date de publication de la demande: 12.10.2011
(73) Titulaire: Dehon S.A., 75011 Paris (FR)
(72) Inventeur: Behaghel, Pierre, 69003 Lyon (FR)
(74) Mandataire: Gevers & Orès

(56) Documents cités:
- EP-A1- 1 010 740
- DE-A1- 10 313 280
- US-A1- 2004 086 757
- US-A1- 2006 027 782
- US-A1- 2006 038 159
- US-A1- 2008 230 740
- US-B2- 7 481 948
- Prof. Jürgen Falbe, Prof. Manfred Regitz: "Römpp Chemie Lexikon", 1995, Georg Thieme Verlag, XP002607532, vol. 5, page 3631, * page 3631 *
- Maria Teresa Sanz ET AL: "Vapor Liquid Equilibria of Binary and Ternary Systems with Water, 1,3-Propanediol, and Glycerol", Journal of Chemical & Engineering Data, vol. 46, no. 3, 1 May 2001 (2001-05-01), pages 635-639, XP055125679, ISSN: 0021-9568, DOI: 10.1021/je000118v

## Description

L'invention concerne un liquide caloporteur par exemple à application dans un circuit de refroidissement de véhicule automobile ou dans un bâtiment, en particulier dans ce cas pour un circuit de chauffage ou de climatisation d'une habitation ou d'un site industriel.

Les documents US 2006/038159 A1, US 2004/086757 A1, US 2008/230740 A1, US 2006/027782 A1, DE 103 13 280 A1 et Maria Teresa Sanz ET AL : « Vapor Liquid Equilibria of Binary and Ternary Systems with Water, 1,3-Propanediol, and Glycerol », Journal of Chemical & Engineering Data, vol. 46, no 3, 1 mai 2001, pages 635-639, décrivent différents fluides caloporteurs.

La tendance depuis un certain nombre d'années est de prendre en compte le caractère écologique des liquides caloporteurs, dont on requiert qu'ils soient, autant que possible, biodégradables, d'origine végétale et réalisés à partir de matières premières renouvelables.

Afin d'éviter que les liquides caloporteurs ne gèlent, la plupart d'entre eux utilisent soit du mono-éthylène glycol (d'acronyme MEG), qui est toxique, soit du mono-propylène glycol (d'acronyme MPG), qui est non toxique mais principalement d'origine fossile. L'un de ces constituants est notamment mélangé à un liquide d'échange de chaleur tel que l'eau pour former un liquide caloporteur dont la température de congélation peut être abaissée entre -5°C à -50°C - par exemple - selon les applications. On ne peut utiliser du sel pour abaisser la température de congélation car il est trop corrosif.

L'utilisation du MPG a formé une avancée significative puisque ce produit est non toxique. La Demanderesse a toutefois cherché à mettre au point un liquide caloporteur encore plus écologique.

Dans cette démarche, la Demanderesse s'est principalement heurtée à la difficulté suivante : s'il est possible de trouver des composants alternatifs pour abaisser la température de congélation d'un liquide caloporteur (on parle classiquement et par abus de langage de produits « anti-congelants »), ces composants présentent d'autres inconvénients qui rend leur utilisation inopportune.

Par exemple, la glycérine (ou glycérol) est un produit anti-congelant efficace, écologique et peu onéreux mais très visqueux et très dense ; par ailleurs, il est difficile de lui associer un inhibiteur de corrosion efficace, la glycérine résistant mal à la température et s'acidifiant fortement lorsqu'elle est chauffée, présentant donc un pH difficile à stabiliser.

Le 1,3-propanediol, produit à partir de glucose extrait de matières premières végétales telles que l'amidon de maïs, présente quant à lui de nombreux avantages en termes de viscosité et de stabilité de pH. Mais il présente l'inconvénient d'être onéreux.

C'est à ce dilemme que la Demanderesse a cherché une solution.

C'est ainsi que l'invention concerne un liquide caloporteur comportant un liquide d'échange de chaleur tel que de l'eau et un composant agencé pour abaisser la température de congélation de ce liquide d'échange de chaleur,caractérisé par le fait que ledit composant est formé d'un mélange comportant, en masse, entre 55% et 65% de glycérine et entre 35% et 45% de 1,3-propanediol, ledit liquide caloporteur comportant en outre un inhibiteur de corrosion. L'invention est remarquable en ce qu'elle propose une combinaison qui n'avait pas été envisagée par l'homme du métier. En effet, l'homme du métier, fabriquant de liquide caloporteur, est un industriel astreint à des contraintes logistiques de stockage. Il n'aurait pas sérieusement envisagé une solution imposant de stocker deux produits différents, d'autant que la glycérine ne peut être stockée à l'extérieur puisqu'elle requiert généralement un chauffage constant pour préserver et conserver ses caractéristiques de fluidité. L'homme du métier aurait d'ailleurs d'autant moins envisagé une telle combinaison que le 1,3-propanediol pur donne entièrement satisfaction d'un point de vue technique et chimique, alors que la glycérine pose de nombreux problèmes n'incitant pas à l'utiliser, même mélangée à un autre élément. Et c'est pourtant en combinant ces éléments, à l'encontre de ces *a priori* et dans des proportions déterminées, que la Demanderesse est parvenue à mettre au point un liquide caloporteur sans monoéthylène glycol ni monopropylène glycol et qui présente des avantages multiples :
- une grande stabilité de pH, son pouvoir corrosif pouvant aisément être inhibé par des inhibiteurs de corrosion ;
- une fluidité importante permettant sa bonne manipulation ;
- un prix maîtrisé grâce à l'utilisation de la glycérine ;
- une origine végétale et donc un caractère écologique marqué, les deux produits étant non toxiques et renouvelables ;
- des caractéristiques améliorées pour la glycérine sans nuire à celles du 1,3-propanediol, le liquide pouvant notamment, dans les proportions revendiquées, conserver ses qualités chimiques sans dégrader son PH jusqu'à 200°C puisque les inhibiteurs de corrosion remplissent correctement leur fonction.

Le fluide caloporteur de l'invention peut être utilisé avantageusement comme liquide de refroidissement d'un moteur thermique de véhicule automobile ou comme liquide caloporteur dans un circuit de climatisation ou de chauffage d'un bâtiment, fût-il d'habitation ou industriel.

Selon l'invention, ledit composant est formé d'un mélange comportant entre 35% et 45% de 1,3-propanediol et entre 55% et 65% de glycérine. La Demanderesse a en effet découvert que, dans ces proportions, les qualités du produit sont parfaitement optimisées en relation avec son coût. Les proportions encore plus optimisées sont, dans ce cas, 40% de 1,3-propanediol et 60% de glycérine.

Selon l'invention, le liquide comporte un inhibiteur de corrosion, en particulier un inhibiteur organique, comportant par exemple du sébaçate de sodium (ou dissodium sébaçate) (c'est-à-dire le sel de sodium de l'acide sébacique) et/ou du tolytriazole et/ou un diazole, de préférence de l'imidazole. La Demanderesse a notamment réalisé que la présence d'un diazole est particulièrement efficace pour la stabilisation du pH du fluide caloporteur.

L'invention concerne encore un procédé de fabrication d'un liquide caloporteur comportant un liquide d'échange de chaleur tel que de l'eau et un composant agencé pour abaisser la température de congélation de ce liquide d'échange de chaleur, ledit composant étant formé d'un mélange de 55 à 65% de glycérine, de 35 à 45 % de 1,3-propanediol et comportant de l'acide sébacique, caractérisé par le fait que l'acide sébacique est solubilisé préalablement à son mélange à la glycérine et au 1,3-propanediol. Un tel procédé permet une fabrication efficace du liquide caloporteur.

Selon une forme de réalisation préférée dans ce cas, l'acide sébacique est préalablement mélangé à du tolyltriazole et/ou à un diazole (de préférence de l'imidazole) en un concentrat inhibiteur de corrosion.

Le procédé présenté ci-dessus est adapté pour la fabrication du liquide présenté ci-dessus.

L'invention concerne encore l'utilisation du liquide présenté ci-dessus comme liquide de refroidissement d'un moteur thermique de véhicule automobile ou comme liquide caloporteur dans un circuit de climatisation ou de chauffage d'un bâtiment.

L'invention sera mieux comprise à l'aide de la description suivante de la forme de réalisation préférée du liquide caloporteur de l'invention.

Un liquide caloporteur conforme à l'invention comporte un liquide d'échange de chaleur, de préférence de l'eau déminéralisée, et un composant anti-congelant formé d'un mélange de glycérine et de 1,3-propanediol; le 1,3-propanediol est de préférence fabriqué à partir de glucose extrait de matières premières végétales telles que l'amidon de maïs, qui sont des ressources renouvelables ; en l'espèce, on utilise par exemple celui commercialisé sous la marque Susterra™ propanediol. La glycérine est encore nommée glycérol. Le liquide caloporteur peut par ailleurs comporter divers autres composants ; dans les formes de réalisation présentées, il comporte un concentrat formé d'un mélange d'inhibiteurs de corrosion, un composant anti-mousse et enfin un colorant, à titre évidemment optionnel. Le colorant est en l'espèce de la chlorophylline E 141.

Selon une première forme de réalisation, le liquide caloporteur est agencé pour présenter une température de congélation sensiblement égale à - 30°C. Sa composition est la suivante, en pourcentages massiques :
- eau déminéralisée : 45,9365%
- lessive de soude à 30,5% : 1,080%
- acide sébacique : 0,816%
- tolyltriazole (par exemple en poudre) : 0,070%
- imidazole : 0,080%
- 1,3-propanediol : 20,800%
- glycéral : 31,200%
- composant anti-mousse (en l'espèce à base de silicone, par exemple celui commercialisé sous l'appellation Foam Ban 3588G) : 0,015%
- colorant : 0,0025%

La fabrication du liquide caloporteur selon cette première forme de réalisation est réalisée en mélangeant les composants de ce liquide dans l'ordre de leur présentation ci-dessus. Le respect de cet ordre est particulièrement avantageux en ce qu'il permet de solubiliser l'acide sébacique (présent par exemple sous forme de poudre) avant de le mélanger avec la glycérine et le 1,3-propanediol. Cela permet d'obtenir le liquide caloporteur dans de bonnes conditions.

Conformément à une forme de réalisation particulière dans ce cas, afin de faciliter la manutention des différents composants, on utilise dans la fabrication du liquide de refroidissement un concentrat inhibiteur de corrosion qui présente la composition suivante :
- eau déminéralisée: 65,902%
- lessive de soude à 30,5% : 18,000%
- acide sébacique : 13,600%
- tolyltriazole (par exemple en poudre) : 1,165%
- imidazole : 1,333%

Ainsi, le liquide présente la composition suivante :
- eau déminéralisée : 41,9825%
- 1,3-propanediol : 20,800%
- glycérol : 31,200%
- concentrat inhibiteur de corrosion : 6,000%
- composant anti-mausse : 0,015%
- colorant : 0,0025%

Dans ce cas, le procédé de fabrication peut comporter les étapes suivantes. Tout d'abord, on fabrique le concentrat inhibiteur de corrosion par mélange de ses composants dans l'ordre de leur présentation ci-dessus ; l'acide sébacique est ainsi solubilisé avant son mélange avec la glycérine et le 1,3-propanediol. Le procédé peut alors être détaillé de la manière suivante. On charge l'eau déminéralisée puis le 1,3-propanediol dans une cuve dans laquelle sont agencés des moyens de brassage adaptés et bien connus de l'homme du métier ; il s'agit par exemple d'un mélangeur. On homogénéise le mélange puis on ajoute la glycérine, qui doit de préférence être à une température supérieure à 35°, et on brasse le mélange jusqu'à homogénéisation complète ; à cet effet, on vérifie de préférence visuellement que le produit est bien homogène et que les phases ne sont plus séparées. On ajoute alors le concentrat et on brasse, de préférence pendant au moins une heure. On ajoute enfin le composant anti-mousse puis le colorant et on homogénéise le tout. Le pH du liquide obtenu à 20°C est sensiblement compris entre 8,4 et 8,6, sa densité à 20°C est sensiblement égale à 1,092 modulo 0,002, sa réserve d'alcalinité est comprise entre 6 et 7 ml et sa température de congélation sensiblement égale à -30°C modulo 2°C.

La fabrication préalable du concentrat inhibiteur de corrosion est classique, de préférence par introduction des additifs successivement dans l'ordre de leur présentation ci-dessus c'est-à-dire : eau déminéralisée, lessive de soude, acide sébacique, tolyltriazole poudre et imidazole, le mélange étant brassé jusqu'à dissolution totale de chacun des composants. Afin de garantir la bonne concentration de chacun des composants et en particulier de l'acide sébacique et de la soude, il est préférable de procéder à une analyse ou un dosage préalable de la teneur en sébaçate de sodium avant utilisation. Le pH du concentrat obtenu est compris entre 9,0 et 9,2 à 20°C, sa densité environ égale à 1,068 modulo 0,002.

Selon une deuxième forme de réalisation, le liquide caloporteur est formé avec un concentrat inhibiteur de corrosion optimisé pour une utilisation en hiver et notamment pour résister à une température de congélation sensiblement égale à -15°C ; il peut en particulier être stocké à l'extérieur y compris pendant l'hiver. Dans ce cas, la composition du concentrat est la suivante, en pourcentages massiques :
- concentrat optimisé pour l'été présenté ci-dessus : 75,000%
- glycérol : 25,000%

Le liquide caloporteur est alors formé avec les proportions suivantes :
- eau déminéralisée : 41,9825%
- 1,3-propanediol : 20,800%
- glycérol : 29,200%
- concentrat inhibiteur de corrosion : 8,000%
- composant anti-mousse : 0,015%
- colorant : 0,0025%

Le procédé de fabrication du liquide caloporteur selon cette deuxième forme de réalisation est identique au procédé de fabrication du liquide caloporteur selon la première forme de réalisation, seules les quantités versées étant modifiées pour adapter les concentrations. Les caractéristiques de densité, de réserve d'alcalinité, de pH et de température de congélation sont identiques.

De même, le procédé de fabrication du concentrat optimisé pour l'hiver est identique à celui du concentrat optimisé pour l'été, avec l'ajout supplémentaire de glycérol une fois que le concentrat optimisé pour l'été a été fabriqué.

## Revendications

1. Liquide caloporteur comportant un liquide d'échange de chaleur tel que de l'eau et un composant agencé pour abaisser la température de congélation de ce liquide d'échange de chaleur, **caractérisé par le fait que** ledit composant est formé d'un mélange comportant, en masse, entre 55% et 65% de glycérine et entre 35% et 45% de 1,3-propanediol, ledit liquide caloporteur comportant en outre un inhibiteur de corrosion.

2. Liquide selon la revendication précédente dans lequel ledit composant est formé d'un mélange qui comporte, en masse, 40% de 1,3-propanediol et 60% de glycérine.

3. Liquide selon l'une des revendications précédentes dans lequel l'inhibiteur de corrosion est, en particulier un inhibiteur organique, par exemple du sébaçate de sodium et/ou du tolytriazole et/ou un diazole, de préférence de l'imidazole.

4. Utilisation du liquide de l'une des revendications 1 à 3 comme liquide de refroidissement d'un moteur thermique de véhicule automobile ou comme liquide caloporteur dans un circuit de climatisation ou de chauffage d'un bâtiment.

5. Procédé de fabrication d'un liquide caloporteur comportant un liquide d'échange de chaleur tel que de l'eau et un composant agencé pour abaisser la température de congélation de ce liquide d'échange de chaleur, ledit composant étant formé d'un mélange compris, en masse, entre 55% et 65% de glycérine, entre 35% et 45% de 1,3-propanediol et comportant de l'acide sébacique, **caractérisé par le fait que** l'acide sébacique est solubilisé préalablement à son mélange à la glycérine et au 1,3-propanediol.

6. Procédé selon la revendication précédente dans lequel l'acide sébacique est préalablement mélangé à du tolyltriazole et/ou à un diazole (de préférence de l'imidazole) en un concentrat inhibiteur de corrosion.

7. Procédé selon l'une des revendications 5 et 6 adapté pour la fabrication du liquide de l'une des revendications 1 à 3.

## Patentansprüche

1. Flüssiges Kühlmittel, umfassend eine Wärmeaustauschflüssigkeit, wie Wasser, und eine Komponente, die dazu vorgesehen ist, die Gefriertemperatur dieser Wärmeaustauschflüssigkeit zu senken, **dadurch gekennzeichnet, dass** die Komponente von einer Mischung gebildet ist, umfassend in Masse zwischen 55% und 65% Glycerin und zwischen 35% und 45% 1,3-Propandiol, wobei das flüssige Kühlmittel ferner einen Korrosionshemmer umfasst.

2. Flüssigkeit nach dem vorhergehenden Anspruch, bei der die Komponente von einer Mischung gebildet ist, die in Masse 40% 1,3-Propandiol und 60% Glycerin umfasst.

3. Flüssigkeit nach einem der vorhergehenden Ansprüche, bei der der Korrosionshemmer insbesondere in organischer Hemmer, beispielsweise Natriumsebacat und/oder Tolyltriazol und/oder Diazol, vorzugsweise Imidazol, ist.

4. Verwendung der Flüssigkeit nach einem der Ansprüche 1 bis 3, als Kühlflüssigkeit eines Verbrennungsmotors eines Kraftfahrzeugs oder als flüssiges Kühlmittel in einem Klima- oder Heizkreislauf eines Gebäudes.

5. Verfahren zur Herstellung eines flüssigen Kühlmittels, umfassend eine Wärmeaustauschflüssigkeit, wie Wasser, und eine Komponente, die dazu vorgesehen ist, die Gefriertemperatur dieser Wärmeaustauschflüssigkeit zu senken, wobei die Komponente von einer Mischung gebildet ist, umfassend in Masse zwischen 55% und 65% Glycerin und zwischen 35% und 45% 1,3-Propandiol, und umfassend Sebacinsäure, **dadurch gekennzeichnet, dass** die Sebacinsäure vor ihrem Mischen mit dem Glycerin und 1,3-Propandiol aufgelöst wird.

6. Verfahren nach dem vorhergehenden Anspruch, bei dem die Sebacinsäure vorher mit Tolyltriazol und/oder einem Diazol (vorzugsweise Imidazol) zu einem korrosionshemmenden Konzentrat gemischt wird.

7. Verfahren nach einem der Ansprüche 5 und 6, das für die Herstellung der Flüssigkeit nach einem der Ansprüche 1 bis 3 vorgesehen ist.

## Claims

1. Heat transfer fluid comprising a heat exchange fluid such as water and a component arranged to lower the freezing temperature of this heat exchange fluid, **characterised by** the fact that said component is formed from a mixture comprising, by weight, between 55% and 65% of glycerine and between 35% and 45% of 1,3-propanediol, said heat transfer fluid further comprising a corrosion inhibitor.

2. Fluid as claimed in the preceding claim wherein said component is formed from a mixture that comprises, by weight, 40% of 1,3-propanediol and 60% of glycerine.

3. Fluid according to one of the preceding claims wherein the corrosion inhibitor is, in particular an organic inhibitor, for example sodium sebacate and/or tolytriazole and/or a diazole, preferably imidazole.

4. Use of the fluid of one of claims 1 to 3 as a coolant of a combustion engine of a motor vehicle or as a heat transfer fluid in an air conditioning or heating circuit of a building.

5. Method for manufacturing a heat transfer fluid comprising a heat exchange fluid such as water and a component arranged to lower the freezing temperature of this heat exchange fluid, said component being formed from a mixture, by weight, between 55% and 65% of glycerine, between 35% and 45% of 1,3-propanediol and comprising sebacic acid, **characterised by** the fact that the sebacic acid is solubilised prior to its mixing with glycerine and 1,3-propanediol.

6. Method as claimed in the preceding claim wherein the sebacic acid is mixed beforehand with tolyltriazole and/or with a diazole (preferably imidazole) in a corrosion inhibitor concentrate.

7. Method according to one of claims 5 and 6 suited for the manufacture of the fluid of one of claims 1 to 3.
